Europäisches Patentamt

European Patent Office

Office européen des brevets

(19)

(11) **EP 1 354 776 A1**

(12) # DEMANDE DE BREVET EUROPEEN

(43) Date de publication:
**22.10.2003 Bulletin 2003/43**

(51) Int Cl.⁷: **B60T 8/32**, B60T 8/00,
B60T 7/04, B60T 8/18,
B60T 8/24

(21) Numéro de dépôt: **03290932.7**

(22) Date de dépôt: **15.04.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **15.04.2002 FR 0204692**

(71) Demandeur: **Renault s.a.s.**
**92100 Boulogne Billancourt (FR)**

(72) Inventeurs:
• **Pothin, Richard**
**92420 Vaucresson (FR)**
• **Richard, Arnaud**
**92150 Suresnes (FR)**
• **Vourch, Géraldine**
**78960 Voisins Le Bretonneux (FR)**

(54) **Système de freinage pour véhicule automobile**

(57) Ce système de freinage pour véhicule automobile comprend des actionneurs de frein (12) raccordés à un calculateur central (10) comprenant des moyens pour élaborer des signaux de commande (C') des actionneurs et asservir la décélération du véhicule (v) sur une valeur de consigne (C) de décélération résultant de l'actionnement d'une pédale de frein (18) du véhicule (v).

Il comporte un ensemble de moyens de mesures de paramètres de roulage du véhicule (S1, S2, S3, S4, S5, S6) raccordés à des modules (28, 30, 32, 34) d'estimation de composantes de perturbation de la décélération du véhicule (v) résultant desdits paramètres de roulage. Le calculateur central (10) comporte des moyens (36) d'estimation de la vitesse du véhicule (v) à partir du signal de commande des actionneurs (12), d'une mesure de la vitesse du véhicule (v) et d'une modélisation du système de freinage du véhicule (v), et des moyens de comparaison de la vitesse estimée et de la vitesse mesurée du véhicule (v) pour élaborer des signaux représentatifs de la variation des composantes de perturbation de la décélération du véhicule.

FIG.3

EP 1 354 776 A1

**Description**

L'invention concerne les systèmes de freinage pour véhicule automobile.

Plus particulièrement, l'invention concerne les systèmes de freinage de véhicule automobile à commande découplée, c'est-à-dire les systèmes de freinage dans lesquels il n'existe pas de lien mécanique direct entre la pédale de frein et l'organe de freinage.

Dans certains systèmes de freinage de ce type, un calculateur central convertit la course de la pédale de frein du véhicule en une consigne de pression de freinage (EHB) ou de serrage (EMB) et procède à un asservissement de la pression de freinage ou du serrage sur la valeur de consigne ainsi calculée. Ainsi, par exemple, si le véhicule roule en pente, ou est chargé, ou de manière générale si les conditions de roulage ont une influence sur la décélération, pour une même pression (EHB) ou un même effort de serrage (EMB), la décélération réelle du véhicule sera plus faible que si le véhicule roule à plat ou à vide.

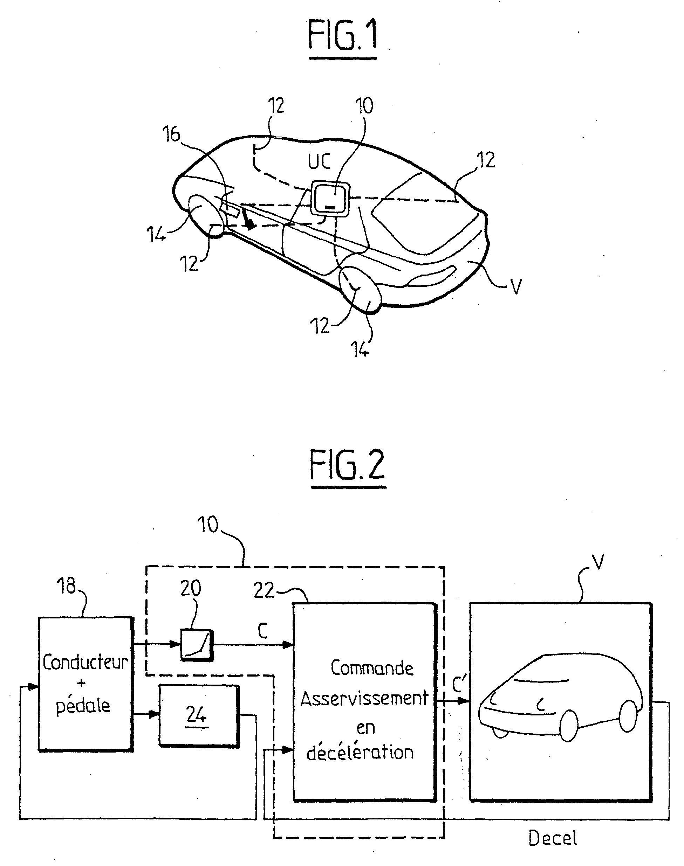

On a représenté sur les figures 1 et 2, un système de freinage de ce type.

Sur la figure 1, le signe de référence numérique 10 désigne le calculateur central embarqué à bord du véhicule, et le signe de référence numérique générale 12 désigne les quatre actionneurs de frein du véhicule.

Ce système de freinage comporte un ensemble de capteurs de mesure de la vitesse des roues du véhicule, tels que 14, ainsi qu'un capteur 16 de mesure de la position de la pédale de frein du véhicule.

En se référant à la figure 2, ce système peut être modélisé sous la forme d'un premier module 18 symbolisant la pédale de frein ainsi que l'effort exercé sur celle-ci par le conducteur. Ce module est raccordé au calculateur central 10 du véhicule, lequel comporte un premier module 20 destiné à élaborer une valeur de consigne C de décélération à partir d'une loi course/décélération prédéterminée, stockée en mémoire, et un module d'asservissement 22 qui élabore un signal de commande C' à destination des actionneurs de frein 12 du véhicule V, à partir d'une mesure de décélération « decel » fournie par les capteurs de vitesse 14. Enfin, un restituteur d'effort passif 24 est associé à la pédale de frein pour exercer sur cette dernière un effort destiné à simuler le comportement d'une pédale de frein qui serait couplée mécaniquement aux organes de freinage du véhicule.

L'objectif d'un tel système de freinage à commande découplé est d'améliorer le confort d'utilisation et la confiance que le conducteur a en son véhicule en garantissant toujours de lui procurer une sensation d'efficacité lorsqu'il appuie sur la pédale de frein.

Le freinage découplé permet d'implémenter facilement un asservissement en décélération, ce qui garantit au conducteur l'obtention d'une réponse identique pour une même sollicitation de la pédale de frein quelle que soit la situation dans laquelle se situe le véhicule.

Comme on le conçoit, certaines perturbations peuvent intervenir sur la décélération du véhicule. Ces perturbations peuvent provenir d'une variation de la masse du véhicule, d'une variation de l'efficacité de freinage, du frein moteur, de l'effort de roulement des pneumatiques, de la résistance aérodynamique du véhicule, ou de la pente de la chaussée sur laquelle circule le véhicule.

L'utilisation d'un système d'asservissement en décélération permet de tenir compte, ou de ne pas tenir compte de certaines de ces perturbations. Il est ainsi possible, le cas échéant, de ne pas tenir compte de certaines de ces composantes de perturbation, de manière à obtenir une décélération du véhicule supérieure à la consigne demandée par le conducteur et procurer ainsi au conducteur une sensation de très grande efficacité de freinage.

Parmi les composantes de perturbation ci-dessus mentionnées, les perturbations engendrées par le roulage d'un véhicule en pente engendrent des problèmes majeurs dans la mesure où, si l'on ne tient pas compte de la décélération initiale du véhicule, le comportement du système freinage peut être mal ressenti par le conducteur. En effet, dans une pente descendante, le véhicule subit avant freinage une accélération due à la pesanteur. Lorsque le conducteur commence à freiner, le véhicule passe brutalement d'une phase d'accélération à une phase de décélération, ce qui entraîne un à-coup qui nuit à l'agrément de conduite.

Pour pallier cet inconvénient, il a été proposé de retrancher la décélération initiale du véhicule à la consigne au moment où le conducteur commence à appuyer sur la pédale.

On pourra à cet égard se référer aux documents US 5 599 072 et US 6 099 085.

Dans le système de freinage décrit dans le document US 5 599 072, la décélération initiale du véhicule est retranchée à la consigne de décélération pour piloter les actionneurs de freinage. Cette technique souffre de plusieurs inconvénients. En effet, si la pente ou si le couple du moteur, ou encore si les efforts de roulement varient au cours du freinage, la force de freinage s'adaptera en conséquence, ce qui n'est pas nécessairement souhaité. En outre, Il n'est pas possible de régler la sensibilité du freinage à la pente ou au couple du moteur, par exemple, en freinant plus en descente.

Dans le système de freinage décrit dans le document US 6 099 085, la masse du véhicule est prise en compte en élaborant le signal de commande des actionneurs de frein à partir du signal de consigne de décélération et d'un signal prédéterminé représentatif de la masse du véhicule qui est stocké en mémoire et qui est par exemple lors du freinage précédent. Ainsi, si lors du freinage précédent, l'effort de freinage a été insuffisant, le signal est augmenté en conséquence. Cependant, selon cette technique, lors des premiers freinages, la décélération n'est pas parfaite. En outre, à chaque changement de chargement du véhicule, la décélération est élaborée initialement sur la base du chargement précédent. Enfin, selon cette technique, la compensation s'effectue par incrémentation et par convergence vers la consigne. Elle n'est donc pas immédiate. En outre, il subsiste un écart perceptible entre la consigne du conducteur et la décélération obtenue.

Ainsi, comme on le conçoit, ces systèmes de freinage ne permettent pas de fournir une décélération fidèle à la volonté du conducteur.

Le but de l'invention est donc de pallier cet inconvénient et de fournir un système de freinage permettant de provoquer un freinage correspondant à la décélération commandée par le conducteur.

L'invention propose donc un système de freinage pour véhicule automobile comprenant des actionneurs de frein raccordés à un calculateur central comprenant des moyens pour élaborer des signaux de commande des actionneurs, et asservir la décélération du véhicule sur une valeur de consigne de décélération résultant de l'actionnement d'une pédale de frein.

Ce système de freinage comporte un ensemble de moyens de mesures de paramètres de roulage du véhicule raccordés à des modules d'estimation de composantes de perturbation de la décélération du véhicule résultant desdits paramètres de roulage.

En outre, le calculateur central comporte des moyens d'estimation de la vitesse et/ou de l'accélération du véhicule à partir d'un signal de commande des actionneurs, d'une mesure de la vitesse du véhicule, et d'une modélisation du système de freinage du véhicule, et des moyens de comparaison de la vitesse estimée et de la vitesse mesurée du véhicule pour élaborer des signaux représentatifs de la variation des composantes de perturbation de la décélération du véhicule.

Il est ainsi possible de prendre en compte des variations de paramètres de roulage du véhicule et d'asservir l'effort de freinage sur la consigne de décélération demandée par le conducteur, et ce en tenant compte, en temps réel, de ces variations.

Selon une autre caractéristique de ce système de freinage, le calculateur central comporte en outre des moyens formant interrupteur pour la sélection d'une partie au moins desdits signaux représentatifs de la variation des composantes de perturbation de la décélération du véhicule pour élaborer les signaux de commande.

De préférence, les moyens formant interrupteur comportent des moyens d'amplification desdits signaux à gain variable.

Selon une autre caractéristique de ce système, le calculateur comporte en outre des moyens pour additionner lesdits signaux représentatifs de la variation des composantes de perturbation de la décélération du véhicule.

Dans un mode de réalisation, le système de freinage comporte en outre des moyens pour soustraire à la valeur de consigne de décélération la sortie des moyens pour additionner lesdits signaux.

Il comporte en outre des moyens pour rendre opérant ou inopérant les moyens d'estimation de la vitesse du véhicule.

Selon une autre caractéristique particulière, les modules d'estimation des composantes de perturbation de la décélération du véhicule comportent un module d'estimation de la pente d'une chaussée sur laquelle circule le véhicule, à partir d'un angle d'inclinaison délivré par un inclinomètre.

Selon encore une autre caractéristique de ce système de freinage, les modules d'estimation de la composante de perturbation de la décélération du véhicule comportent un module d'estimation de la résistance aérodynamique du véhicule à partir d'une mesure de vitesse du véhicule.

Les modules d'estimation de la composante de perturbation de la décélération du véhicule peuvent en outre comporter un module d'estimation de la résistance au roulement des pneumatiques du véhicule à partir d'une mesure de vitesse du véhicule, ainsi qu'un module d'estimation de la résistance au roulement transmis aux roues du véhicule par le groupe motopropulseur, à partir du couple et du régime du moteur et du rapport de vitesse engagé.

Enfin, les modules d'estimation de la composante de perturbation de la décélération du véhicule peuvent comporter un module d'estimation de la masse du véhicule.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1, dont il a déjà été fait mention, illustre la structure générale d'un système de freinage pour véhicule automobile ;
- la figure 2 est un schéma synoptique de principe illustrant la structure générale d'un système de freinage de véhicule automobile ; et
- la figure 3 est un schéma synoptique d'un système de freinage conforme à l'invention.

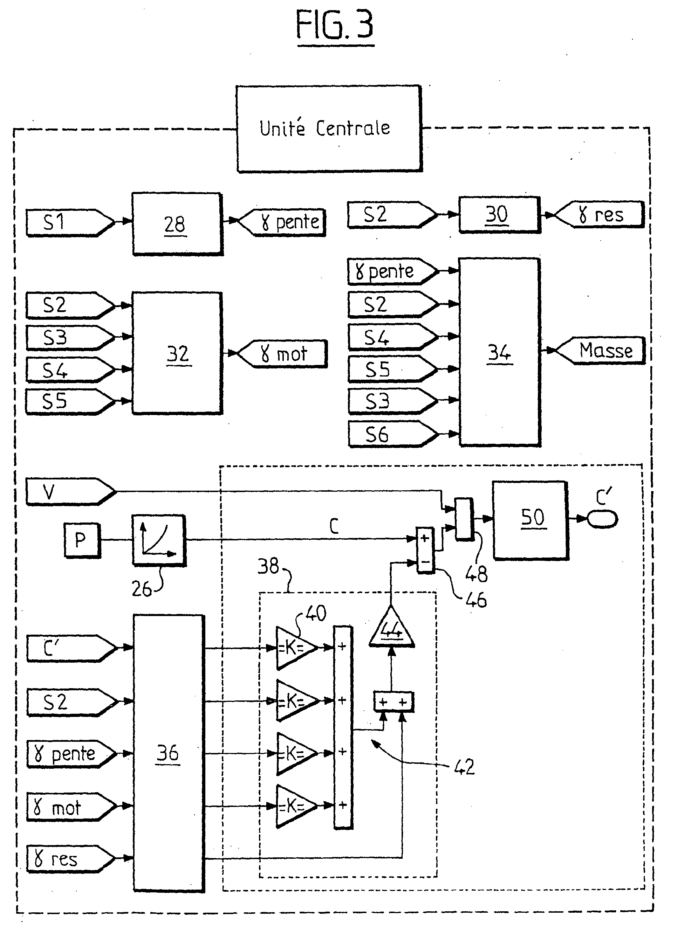

Sur la figure 3, on a représenté respectivement l'architecture générale de l'unité centrale d'un système de freinage conforme à l'invention.

Comme indiqué précédemment, une telle unité centrale est destinée à être embarquée à bord d'un véhicule automobile pour piloter les actionneurs de frein, en fournissant à ces derniers un signal de commande C', destiné à être appliqué aux actionneurs de frein pour fournir un effort de freinage identique pour une même sollicitation de la pédale de frein, quelles que soient les conditions de roulage du véhicule.

A cet effet, le système de freinage incorporant cette unité centrale est pourvu d'une pédale de frein P conventionnelle raccordée à un module 26 d'élaboration d'un signal de consigne C à partir d'une loi course/décélération, sur lequel il convient d'asservir le signal de commande C'.

Le système de freinage comporte en outre un restituteur d'effort passif, de type classique, associé à la pédale de frein, pour fournir à cette dernière un effort résistif destiné à simuler le comportement d'une pédale de frein couplée mécaniquement aux actionneurs de frein.

Enfin, le système de freinage est complété par un ensemble d'organes de mesure de paramètres de roulage du véhicule (non représentés) fournissant des signaux S1-S6 représentatifs de conditions de roulage du véhicule. Ces signaux de mesure sont délivrés par des capteurs appropriés pour l'utilisation envisagée. Leur structure ne sera donc pas décrite en détail par la suite. Ces signaux de mesure S1-S6 sont, par exemple, constitués respectivement de signaux de mesure des paramètres de roulage suivants :

- l'inclinaison du véhicule ;
- la vitesse du véhicule ;
- la position d'embrayage ;
- le régime du moteur ;
- le couple fourni par le moteur ; et
- la position de la pédale de frein.

En outre, l'unité centrale comporte des modules d'estimation de composantes de perturbation de la décélération du véhicule résultant des paramètres de roulage, désignés par les références numériques générales 28, 30, 32 et 34. Ces modules d'estimation sont destinés à fournir une estimation des perturbations résultant des conditions de roulage du véhicule.

Ainsi, un premier module d'estimation 28 élabore un signal $\gamma_{pente}$ à partir du signal S1 de mesure de l'inclinaison du véhicule. Ce module d'estimation 28 élabore une estimation de la décélération due à la pesanteur, à partir de la relation suivante :

$$\gamma_{pente} = g \cdot \sin \alpha \qquad (1)$$

dans laquelle :

$\alpha$ désigne l'angle d'inclinaison du véhicule ; et
g est l'accélération due à la gravité.

En ce qui concerne le deuxième module d'estimation 30, celui-ci procède à une estimation de la composante perturbatrice due à la résistance aérodynamique du véhicule et au roulement des pneus. Ce module 30 reçoit, en entrée, le signal S2 de mesure de la vitesse du véhicule. Il calcule, d'une part, la composante de décélération due à la résistance aérodynamique, selon la relation suivante :

$$\gamma_{aero} = \frac{\rho \cdot SC_x}{2.M_{veh}} \cdot (\Delta \upsilon)^2 \cong \frac{\rho \cdot SC_x}{2.M_{veh}} \cdot \upsilon^2 \qquad (2)$$

dans laquelle :

$\rho$ est la masse volumique de l'air ;
$SC_x$ est un coefficient qui dépend de la surface et de la forme de la caisse du véhicule ;
$\Delta \upsilon$ est la différence entre la vitesse du véhicule et la vitesse du vent ;
$\upsilon$ est la vitesse mesurée du véhicule ; et
$M_{veh}$ est la masse du véhicule.

Par ailleurs, il élabore la composante perturbatrice de décélération due au roulement des pneus du véhicule, à partir de la relation suivante :

$$\gamma_{roul} = F_{pneus} \ (v_{veh}) \tag{3}$$

dans laquelle $F_{pneus}$ est le coefficient de résistance au roulement des pneus.

Ce coefficient peut être approximé d'une façon linéaire avec la vitesse du véhicule.

Ce module d'estimation 30 procède en outre au calcul de la somme de la composante de décélération due à la résistance aérodynamique du véhicule et de la composante de décélération due au roulement des pneus, selon la relation suivante :

$$\gamma_{res} = \gamma_{roul} + \gamma_{aero} \tag{4}$$

Cette décélération globale pouvant être approximée par la relation suivante :

$$\gamma_{res} \cong \theta_1 + \theta_2 V + \theta_3 V^2 \tag{5}$$

dans laquelle $\gamma_{res}$, $\theta_1$, $\theta_2$, $\theta_3$ peuvent être par exemple obtenus par des mesures sur le véhicule.

Un troisième module 32 estime la composante de perturbation due aux efforts du moteur transmis aux roues. Cette composante est élaborée à partir de la relation suivante :

$$\gamma_{mot} = \frac{- C_{emb}}{r_{boite} \cdot R_{roue} \cdot M_{veh}} \tag{6}$$

dans laquelle :

$C_{emb}$ est le couple fourni par l'embrayage, calculé à partir de la position d'embrayage et du couple moteur (signaux S3 et S5) ;

$R_{boite}$ est le ratio du rapport de vitesse engagé ; et

$R_{roue}$ est le rayon sous charge de la roue.

Enfin, un quatrième module d'estimation 34 estime la masse du véhicule. Ce module 34 d'estimation reçoit, en entrée, la composante de perturbation due à la pente du véhicule $\gamma_{pente}$, le signal S2 de mesure de la vitesse du véhicule, le signal S3 correspondant à la position du rapport de vitesse enclenché, le signal S4 correspondant au régime du moteur, le signal S5 correspondant au couple du moteur, et le signal S6 de mesure de la position du frein.

Ce module 34 élabore un signal représentatif de la masse du véhicule. Les techniques d'estimation de la masse du véhicule sont bien connues de l'homme du métier. En effet, la masse d'un véhicule peut être estimée par la méthode dite des moindres carrés récursifs appliquée en phase d'accélération. On pourra à cet égard se référer, pour l'implémentation de ce module au document US 6,167,357.

Comme indiqué précédemment, ces composantes de perturbation ainsi calculées sont utilisées pour l'élaboration du signal de commande C' à destination des actionneurs de frein.

A cet effet, l'unité centrale comporte un module d'observation 36 de ces composantes de perturbation, de manière à élaborer des signaux représentatifs de la variation de ces composantes.

Ce module d'observation 36 incorpore un modèle du système de freinage et procède à une estimation de la vitesse du véhicule, de l'accélération du véhicule et des perturbations paramétriques à partir du signal de mesure de vitesse S2, et des estimations élaborées par les modules 28, 30, 32, et 34. La différence entre la vitesse estimée et la vitesse mesurée est intégrée, par la méthode dite de « Forward Euler » pour donner l'estimation des variations des composantes de perturbation de la décélération. Pour ce faire, ce module d'observation 36 met en oeuvre les calculs suivants :

$$\dot{\hat{v}} = freinage(C') + \gamma_{pente} + \gamma_{mot} + \gamma_{res} + \hat{\delta}(\Delta M_{veh}, \Delta\mu, \varepsilon) + k_1(v - \hat{v}) \tag{7}$$

et

$$\dot{\hat{\delta}} \;=\; k_2(v - \hat{v}) \tag{8}$$

dans lesquels :

$\hat{v}$ est la vitesse estimée du véhicule ;
$v$ est la vitesse mesurée du véhicule ;
$\delta$ est l'ensemble des perturbations paramétriques estimées ;
$\Delta M_{veh}$ est la variation de masse du véhicule ;
$\Delta \mu$ est la variation de l'efficacité de freinage ;
$\varepsilon$ correspond aux erreurs de modèles ;
$k_1$, $k_2$ sont les paramètres de réglage de l'observateur ; et
*freinage(C')* désigne une modélisation de l'effet de la commande de freinage sur la décélération du véhicule.

Par exemple, si la commande est une force de serrage, cette modélisation est donnée par une relation du type :

$$Freinage(C')= K.mu.C'/Masse$$

Dans laquelle :

*Mu* est un coefficient de frottement des plaquettes de frein sur le disque ;
*Masse* est la masse du véhicule ; *et*
*K* est un coefficient constant.

Si les organes de mesure de paramètres de roulage, permettant l'estimation des perturbations, ne renvoient pas d'informations disponibles, il n'est plus possible d'isoler les perturbations les une par rapport aux autres, et ces dernières ne sont plus disponibles séparément à l'entrée de ce module d'observation 36. Les calculs mis en oeuvre deviennent alors :

$$\dot{\hat{v}} \;=\; freinage(u) + \hat{\delta}(\gamma_{pente}, \gamma_{mot}, \gamma_{res}, \Delta M_{veh}, \Delta \mu, \varepsilon) + k_1(v - \hat{v}) \tag{9}$$

et

$$\dot{\hat{\delta}} \;=\; k_2(v - \hat{v}) \tag{10}$$

avec :

$\hat{\delta}$ représente l'ensemble des perturbations estimées.

La différence entre la vitesse estimée et la vitesse mesurée est intégrée (par la méthode de « Forward Euler ») pour donner l'estimation des variations de paramètres $\delta$.
Cet exemple montre que $\delta$ estime sans distinction l'ensemble des perturbations qui ne sont pas fournies à l'entrée de l'observateur.
Cette variante propose un fonctionnement différent de l'asservissement de décélération mais ne dégrade pas ses performances.
En aval du module d'observation 36, l'unité centrale comporte un module 38 de moyens formant interrupteur, recevant chacun des signaux fournis par le module d'observation 36. Ce module est destiné à permettre une prise en compte de telle ou telle perturbation, de façon globale ou partielle (par exemple un rejet seulement partiel de la perturbation due à la pente dans les descentes). Chacun de ces moyens formant interrupteur comporte un étage d'amplification, tel que 40, à gain variable, entre 0 et 1, de manière à rejeter ou prendre en compte la composante de perturbation correspondante, ainsi que des additionneurs pour combiner ces différentes composantes.

En outre, un interrupteur additionnel 44 permet d'activer ou de désactiver l'asservissement, et permet de passer facilement d'un mode d'activation à un mode de désactivation, ce qui est utile pour les fonctions de sûreté de fonctionnement du système gérées en parallèle.

En sortie de ce module 38 formant interrupteur, un comparateur 46 soustrait à la consigne de décélération C élaborée à partir de la course de la pédale de frein le signal de perturbation global résultant de la combinaison des différentes composantes de perturbation.

Un multiplicateur 48 procède à une multiplication entre le signal de sortie du soustracteur 46 et une variable V représentative de l'action du conducteur sur la pédale de frein, qui est positionnée à 1 lorsque le conducteur actionne cette pédale.

Enfin, l'unité centrale est pourvue d'un module de saturation variable 50 réalisant un seuillage de la sortie du multiplicateur 48, de manière à positionner un seuil de compensation au-delà duquel les effets des perturbations ne sont plus compensées par l'asservissement.

On notera que ce bloc peut être également utilisé pour améliorer les performances du circuit d'asservissement dans des cas particuliers. Par exemple, lorsque le système de freinage est pourvu d'un dispositif d'antiblocage des roues (ABS), l'adhérence de la route peut varier de telle sorte que ce dispositif, portant activé, ne régule plus. Dans ce cas, il est possible de faire varier le seuil de compensation du module de saturation 50 afin d'optimiser le temps de réponse de l'asservissement, cette variation de seuil pouvant être effectuée dès que le système d'antiblocage est activé.

On notera enfin que l'invention n'est pas limitée au mode de réalisation décrit. En effet, le système de freinage décrit précédemment, qui utilise le couple d'embrayage qui est calculé au moyen du couple moteur et de la position d'embrayage, le rapport de boîte et le rayon de roue, est destiné à équiper un véhicule automobile pourvu d'un groupe motopropulseur équipé d'une boîte de vitesse mécanique. Cependant, un tel système peut également être destiné à équiper un autre type de groupe motopropulseur, par exemple à boîte automatique, semi-automatique, hybride,... L'estimation des composantes de perturbations serait alors adaptée en conséquence, en utilisant des signaux de mesure spécifiques.

**Revendications**

1. Système de freinage pour véhicule automobile, comprenant des actionneurs de frein (12) raccordés à un calculateur central (10) comprenant des moyens pour élaborer des signaux de commande (C') des actionneurs et asservir la décélération du véhicule sur une valeur de consigne de décélération résultant de l'actionnement d'une pédale de frein du véhicule, **caractérisé en ce qu'**il comporte un ensemble de moyens de mesures de paramètres de roulage (S1, S2, S3, S4, S5, S6) du véhicule raccordés à des modules (28, 30, 32, 34) d'estimation de composantes de perturbation de la décélération du véhicule résultant desdits paramètres de roulage, et **en ce que** le calculateur central comporte des moyens (36) d'estimation de la vitesse et/ou de l'accélération du véhicule à partir du signal de commande (C') des actionneurs, d'une mesure de la vitesse du véhicule et d'une modélisation du système de freinage du véhicule, et des moyens de comparaison de la vitesse estimée et de la vitesse mesurée du véhicule pour élaborer des signaux représentatifs de la variation des composantes de perturbation de la décélération du véhicule.

2. Système de freinage selon la revendication 1, **caractérisé en ce que** le calculateur central comporte en outre des moyens formant interrupteur (38) pour la sélection d'une partie au moins desdits signaux représentatifs de la variation des composantes de perturbation de la décélération du véhicule pour élaborer les signaux de commande.

3. Système de freinage selon l'une des revendications 1 et 2, **caractérisé en ce que** les moyens formant interrupteur comportent des moyens d'amplification (40) desdits signaux à gain variable.

4. Système de freinage selon l'une quelconque des revendications 1 à 3, **caractérisé en ce que** le calculateur comporte en outre des moyens (42) pour additionner lesdits signaux représentatifs de la variation des composantes de perturbation de la décélération du véhicule.

5. Système de freinage selon la revendication 4, **caractérisé en ce qu'**il comporte des moyens (46) pour soustraire à la valeur de consigne de décélération la sortie des moyens pour additionner lesdits signaux.

6. Système de freinage selon la revendication 5, **caractérisé en ce qu'**il comporte des moyens (44) pour rendre opérant ou inopérant les moyens (36) d'estimation de la vitesse du véhicule.

**7.** Système de freinage selon l'une quelconque des revendications 1 à 6, **caractérisé en ce que** les modules d'estimation des composantes de perturbation de la décélération du véhicule comportent un module (28) d'estimation de la pente d'une chaussée sur laquelle circule le véhicule, à partir d'un angle d'inclinaison délivré par un inclinomètre.

**8.** Système de freinage selon l'une quelconque des revendications 1 à 7, **caractérisé en ce que** les modules d'estimation de la composante de perturbation de la décélération du véhicule comportent un module (30) d'estimation de la résistance aérodynamique du véhicule à partir d'une mesure de vitesse du véhicule.

**9.** Système de freinage selon l'une quelconque des revendications 1 à 8, **caractérisé en ce que** les modules d'estimation de la composante de perturbation de la décélération du véhicule comportent un module (30) d'estimation de la résistance au roulement des pneumatiques du véhicule à partir d'une mesure de vitesse du véhicule.

**10.** Système de freinage selon l'une quelconque des revendications 1 à 9, **caractérisé en ce que** les modules d'estimation de la composante de perturbation de la décélération du véhicule comportent un module (32) d'estimation de la résistance au roulement transmis aux roues du véhicule par le groupe motopropulseur, à partir du couple et du régime du moteur et du rapport de vitesse engagé.

**11.** Système de freinage selon l'une quelconque des revendications 1 à 10, **caractérisé en ce que** les modules d'estimation de la composante de perturbation de la décélération du véhicule comportent un module (34) d'estimation de la masse du véhicule.

## FIG.1

## FIG.2

# FIG.3

**EP 1 354 776 A1**

**Office européen des brevets**

**RAPPORT DE RECHERCHE EUROPEENNE**

Numéro de la demande

**EP 03 29 0932**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 196 54 769 A (TEVES GMBH ALFRED)<br>2 juillet 1998 (1998-07-02)<br>* page 3, ligne 25 - ligne 34 *<br>* page 3, ligne 58 - page 4, ligne 22 *<br>* page 4, ligne 67 - page 5, ligne 4 *<br>* page 13, ligne 30 - ligne 67 *<br>* page 23, ligne 34; figure S *<br>--- | 1 | B60T8/32<br>B60T8/00<br>B60T7/04<br>B60T8/18<br>B60T8/24 |
| A | DE 195 11 844 A (TEVES GMBH ALFRED)<br>2 octobre 1996 (1996-10-02)<br>* colonne 1, ligne 22 - ligne 63 *<br>* colonne 2, ligne 4 - ligne 23 *<br>* colonne 6, ligne 50 - colonne 7, ligne 48 *<br>--- | 1 | |
| A | EP 0 173 954 A (BOSCH GMBH ROBERT)<br>12 mars 1986 (1986-03-12)<br>* page 3, alinéa 1 - page 6, alinéa 3; figures 2-5 *<br>--- | 1 | |
| A | US 5 178 441 A (HEIBEL HELMUT  ET AL)<br>12 janvier 1993 (1993-01-12)<br>* colonne 3, ligne 8 - ligne 23 *<br>* colonne 6, ligne 50 - ligne 60; figure 1 *<br>--- | 1 | DOMAINES TECHNIQUES RECHERCHES (Int.Cl.7)<br><br>B60T |
| A | DE 197 35 562 A (ITT MFG ENTERPRISES INC)<br>18 février 1999 (1999-02-18)<br>* colonne 5, ligne 32 - colonne 7, ligne 43 *<br>----- | 1 | |

Le présent rapport a été établi pour toutes les revendications

| Lieu de la recherche | Date d'achèvement de la recherche | Examinateur |
|---|---|---|
| MUNICH | 22 juillet 2003 | HERNANDEZ, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 03 29 0932

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-07-2003

| Document brevet cité au rapport de recherche | | Date de publication | Membre(s) de la famille de brevet(s) | | Date de publication |
|---|---|---|---|---|---|
| DE 19654769 | A | 02-07-1998 | DE | 19654769 A1 | 02-07-1998 |
| | | | WO | 9829279 A2 | 09-07-1998 |
| | | | EP | 1285808 A1 | 26-02-2003 |
| | | | EP | 0946377 A2 | 06-10-1999 |
| DE 19511844 | A | 02-10-1996 | DE | 19511844 A1 | 02-10-1996 |
| EP 0173954 | A | 12-03-1986 | DE | 3432841 A1 | 20-03-1986 |
| | | | DE | 3585062 D1 | 13-02-1992 |
| | | | EP | 0173954 A2 | 12-03-1986 |
| | | | JP | 1970411 C | 18-09-1995 |
| | | | JP | 6104442 B | 21-12-1994 |
| | | | JP | 61071261 A | 12-04-1986 |
| US 5178441 | A | 12-01-1993 | DE | 3943002 A1 | 04-07-1991 |
| | | | BR | 9006591 A | 01-10-1991 |
| | | | DE | 59005933 D1 | 07-07-1994 |
| | | | EP | 0435113 A1 | 03-07-1991 |
| | | | ES | 2053066 T3 | 16-07-1994 |
| | | | JP | 3292250 A | 24-12-1991 |
| | | | KR | 169720 B1 | 15-01-1999 |
| DE 19735562 | A | 18-02-1999 | DE | 19735562 A1 | 18-02-1999 |
| | | | WO | 9908914 A1 | 25-02-1999 |
| | | | EP | 1005423 A1 | 07-06-2000 |
| | | | JP | 2001514992 T | 18-09-2001 |

EPO FORM P0460

Pour tout renseignement concernant cette annexe : voir Journal Officiel de l'Office européen des brevets, No.12/82